# EUROPÄISCHE PATENTSCHRIFT

(11) **EP 3 313 928 B1**
(45) Veröffentlichungstag und Bekanntmachung des Hinweises auf die Patenterteilung: **08.01.2020**
(21) Anmeldenummer: 16733412.7
(22) Anmeldetag: 24.06.2016
(51) Int. Cl.: C08L 15/00, C08K 5/14, C08L 21/00, C08L 83/04

(54) **MIT AMIN VERNETZBARE KAUTSCHUKZUSAMMENSETZUNG MIT HELLEM FÜLLSTOFF**
CROSSLINKABLE RUBBER COMPOSITION WITH CLEAR FILLER
COMPOSITION DE CAOUTCHOUC RÉTICULABLE À L'AIDE D'AMINES COMPRENANT UN AGENT DE REMPLISSAGE CLAIR

(30) Priorität: 26.06.2015 EP 15174187
(43) Veröffentlichungstag der Anmeldung: 02.05.2018
(73) Patentinhaber: Schill + Seilacher "Struktol" GmbH, 22113 Hamburg (DE)
(72) Erfinder: BÖRGER, Volker, 22085 Hamburg (DE); BECKER, Dörte, 21035 Hamburg (DE); HENSEL, Manfred, 21255 Tostedt (DE)
(74) Vertreter: Uexküll & Stolberg
(86) Internationale Anmeldenummer: PCT/EP2016/064667
(87) Internationale Veröffentlichungsnummer: WO 2016/207352

(56) Entgegenhaltungen:
- EP-A1- 2 151 479
- EP-A1- 2 354 145

## Beschreibung

Die vorliegende Erfindung betrifft vulkanisierbare Kautschukzusammensetzungen mit einem Gehalt an Kautschuk, der einer Aminvernetzung zugänglich ist. Die Kautschukzusammensetzung enthält ferner hellen Füllstoff. Ferner betrifft die Erfindung einen vulkanisierten Kautschuk, der durch Vulkanisieren der Kautschukzusammensetzung erhältlich ist. Darüber hinaus betrifft die Erfindung die Verwendung von NH₂-funktionalisierten Polyorganosiloxanen in einer vulkanisierbaren Kautschukzusammensetzung zur Senkung des Druckverformungsrests des vulkanisierten Kautschuks.

Kautschuke, die mit Diaminen vulkanisierbar sind, lassen sich im Allgemeinen zu Vulkanisaten mit guter Kältebeständigkeit, hoher Hitzebeständigkeit und guten mechanischen Eigenschaften verarbeiten. Zur Vernetzung mit Amin basieren diese Kautschuke auf Monomeren mit funktioneller Gruppe. Typischerweise handelt es sich bei der funktionellen Gruppe um eine Carbonsäuregruppe. Die bekanntesten Polymere, die einer Aminvernetzung zugänglich sind, sind Acrylatkautschuke (ACM), wie sie beispielsweise von Unimatec und von Zeon hergestellt werden, sowie Ethylen-Acrylat-Kautschuke (AEM), wie sie beispielsweise von DuPont erhältlich sind. Außerdem kann Hydrierter Acrylnitril-Butadien-Kautschuk (HNBR-Kautschuk, z.B. von Zeon) mittels Amin vernetzt werden.

Die Vernetzung während der Vulkanisation läuft typischerweise über die Reaktion mit einem primären Diamin ab, welches mit der Vernetzungsstelle in der Polymerhauptkette eine Amidfunktionalität bildet. Nach dem Vernetzen werden die Kautschukzusammensetzungen in der Regel noch über mehrere Stunden bei beispielsweise etwa 175°C getempert. Dabei wird durch die Reaktion einer Amidgruppe mit einer Carboxylfunktionalität in der Polymerkette eine Imidfunktionalität erzeugt.

Die Verwendung von hellen Füllstoffen in derartigen Kautschukzusammensetzungen ist nicht weit verbreitet, weil helle Füllstoffe zu einer Verschlechterung des Druckverformungsrests führen. Durch die Verwendung von Organosilanen ist es allerdings möglich, den Druckverformungsrest zu verbessern.

Der Druckverformungsrest ist eine wichtige Kenngröße beispielsweise für Dichtungen, die eine hohe Rückstellkraft benötigen. Der Parameter definiert das Verhalten eines elastomeren Prüfkörpers bei einer konstanten Verformung und anschließender Entspannung über einen bestimmten Zeitraum bei einer bestimmten Temperatur. Ermittelt wird die Rückstellkraft eines elastomeren Prüfkörpers. Typische Zeiträume für eine Druckverformungsrest-Untersuchung sind 24 h bis 2000 h bei Temperaturen bis 200°C. Nach der Entspannung werden die Probekörper über einen definierten Zeitraum bei Raumtemperatur gelagert und anschließend wieder die Höhe ermittelt. Daraus lässt sich die bleibende Verformung errechnen.

Je mehr der elastomere Probekörper in der Lage ist, seine ursprüngliche Höhe wieder zu erreichen, desto niedriger ist der Wert für den Druckverformungsrest. Ein Druckverformungsrest von 0% bedeutet, dass die vor der Verformung ermittelte Dicke wieder erreicht wird, während ein Druckverformungsrest von 100% anzeigt, dass keine Rückstellung erfolgt. Die Bestimmung des Druckverformungsrestes erfolgt in der vorliegenden Beschreibung gemäß DIN ISO 815.

In der Kautschuktechnologie ist allgemein die Verwendung von Organosilanen weit verbreitet, um eine Verbindung zwischen verstärkenden Füllstoffen (beispielsweise hellen Füllstoffen, wie Kieselsäure) mit dem eingesetzten Polymer herzustellen.

Geeignete Kieselsäuren tragen auf der Oberfläche Silanol (SiOH)-Gruppen, die mittels Kondensation und unter Wasserabspaltung mit den Alkoxygruppen eines Organosilans reagieren können, wodurch eine kovalente Bindung zwischen Kieselsäurefüllstoff und Silan hergestellt wird.

Derartige Organosilane sind beispielsweise Verbindungen, die neben funktionellen Alkoxygruppen zur Anbindung an den Füllstoff eine Funktionalität tragen, die mit dem Polymer eine Bindung eingehen kann. In der Kautschukverarbeitung sind u.a. schwefelhaltige Silane wie beispielsweise Bis[3-(triethoxysilyl)propyl]tetrasulfid weit verbreitet, während bei der Peroxidvernetzung vinylhaltige Organosilane (beispielsweise Vinyltriethoxysilan) und bei der Aminvernetzung Organosilane mit Aminopropylfunktionalität zum Einsatz kommen (beispielsweise 3-Aminopropyltriethoxysilan).

In HNBR-Kautschukmischungen für die Aminvernetzung ist es mit hellen Füllstoffen auch ohne die Verwendung eines Organosilans möglich, relativ gute Ergebnisse für den Druckverformungsrest zu erhalten. Die im Vulkanisat erzielten Werte für die Zugfestigkeit und Bruchdehnung sind dann akzeptabel. Durch die Zugabe beispielsweise eines Amino-Silans ist es dann möglich, den Druckverformungsrest weiter zu verbessern, allerdings fallen die weiteren physikalischen Kennzahlen wie Zugfestigkeit und Reißdehnung schlechter aus. Insbesondere die Reißdehnung wird stark verringert.

Die EP 2 151 479 A1 offenbart Polyorganosiloxane mit 3 oder mehr Siloxaneinheiten, die i) mindestens einen organischen Anteil R¹, wobei R¹ mindestens eine Kohlenstoff-Kohlenstoff-Mehrfachbindung aufweist, und ii) mindestens einen Kohlenwasserstoffanteil R² aufweisen, wobei R² eine Kettenlänge von 5 bis 50 Kohlenstoffatomen besitzt. Die EP 2 354 145 A1 betrifft die Verwendung von Polyorganosiloxanen mit 3 oder mehr Siloxaneinheiten, die i) mindestens einen organischen Antaiel R¹ aufweisen, wobei R¹ mindestens eine Kohlenstoff-Kohlenstoff-Mehrfachbindung aufweist, und wobei die Anwesenheit von Kohlenwasserstoffanteilen mit einer Kettenlänge von 5 bis 50 Kohlenstoffatomen ausgeschlossen ist, als Additiv bei der Verarbeitung von Kautschuk. Die Polyorganosiloxane werden bei der Verarbeitung und Vulkanisation von Kautschuk eingesetzt und reaktiv in diesen eingebunden. Sie ergeben eine Senkung der Viskosität des Kautschuks bei der Verarbeitung und gegebenenfalls eine Verbesserung der mechanischen Eigenschaften des vulkanisierten Kautschuks.

Die EP 2 660 285 A1 offenbart die Vulkanisation von Kautschukzusammensetzungen, die einen Nitrilkautschuk mit Carboxylgruppe und ein reaktives Silikonöl enthalten. Diese Zusammensetzungen lassen sich zu vernetzten Kautschuken mit geringer Oberflächenreibung verarbeiten, die selbst in Kontakt mit Öl die normalen physikalischen Eigenschaften besitzen. Beispielhafte funktionelle Gruppen des reaktiven Silikonöls gemäß EP 2 660 285 A1 sind Hydroxy-, Amino-, Mercapto-, Epoxy-, Carboxyl- und (Meth)Acryl-Gruppen.

In der EP 2 660 285 A1 werden beispielhafte Zusammensetzungen mit einem Gehalt an hellem Füllstoff beschrieben, die ferner eine vergleichsweise hohe Menge des reaktiven Silikonöls enthalten (5 bis 15 Gewichtsteile, bezogen auf 100 Gewichtsteile Kautschuk, phr), und darüber hinaus typischerweise 1 phr 3-Aminopropyltriethoxysilan. Das reaktive Silikonöl ist mit einer NH₂-Gruppe einfach funktionalisiert, dadurch ist es nicht in der Kautschukmatrix fixiert und kann als relativ unpolares Material zu einem gewissen Maß aus der relativ polaren Kautschukmatrix diffundieren und somit den Reibungskoeffizienten herabsetzen. Die Verbesserung im Druckverformungsrest ist gering.

Demzufolge hat der vorliegenden Erfindung die Aufgabe zu Grunde gelegen, Kautschukzusammensetzungen bereitzustellen, die helle Füllstoffe enthalten und die sich zu Vulkanisaten mit guten mechanischen Kennwerten verarbeiten lassen. Die Vulkanisate sollen insbesondere einen guten Druckverformungsrest haben.

Es wurde nun überraschenderweise gefunden, dass die physikalischen Eigenschaften von mit Amin vulkanisierbaren Kautschuken, die helle, verstärkende Füllstoffe enthalten, durch die Zugabe von bestimmten funktionalisierten Silikonölen (Polyorganosiloxanen) positiv beeinflusst werden. Durch die erfindungsgemäße Zugabe der mindestens zweifach mit NH₂ funktionalisierten Polyorganosiloxane ist es vor allem möglich, hohe Zugfestigkeiten in Verbindung mit akzeptabler Reißdehnung zu erhalten und den Druckverformungsrest zu verbessern. Erfindungsgemäß kommt man vorteilhafterweise nicht nur mit wenig oder ohne zugesetztes Organosilan aus, sondern die geringe Menge oder das Weglassen von Organosilan verbessert die physikalischen Eigenschaften der Vulkanisate dahingehend, dass sich - verglichen mit der ausschließlichen Verwendung eines Organosilans in üblichen Konzentrationen - ein deutlich ausgewogeneres Gleichgewicht zwischen Druckverformungsrest, Reißdehnung und Zugfestigkeit ergibt. Es wird davon ausgegangen, dass die mindestens zweifache Funktionalisierung mit einer NH₂-Gruppe bei den gemäß der vorliegenden Erfindung eingesetzten Polyorganosiloxanen dazu führt, dass die physikalischen Eigenschaften (wie Druckverformungsrest) entscheidend verbessern werden. Im Gegensatz dazu ist das in der EP 2 660 285 A1 beispielhaft erwähnte reaktive Silikonöl nur einfach mit einer NH₂-Gruppe funktionalisiert und entsprechend einfach mit der Kautschukmatrix verknüpft und hat nicht die Möglichkeit, eine zweite Verknüpfung oder Vernetzung aufzubauen.

Erfindungsgemäß kann mit einer Vielzahl von Additiven (einschließlich weiteren Füllstoffen, wie Ruß) gearbeitet werden, was außerordentlich vorteilhaft ist.

Darüber hinaus ist es durch die erfindungsgemäße Zugabe der NH₂-funktionalisierten Polyorganosiloxane möglich, die Verarbeitbarkeit der Kautschukzusammensetzungen zu verbessern. Es werden beispielsweise positive Effekte hinsichtlich des Release-Verhaltens von Metalloberflächen beobachtet. Außerdem wird durch Verringerung der Mooney-Viskosität das Fließen der Zusammensetzungen verbessert.

Gemäß einem ersten Aspekt betrifft die vorliegende Erfindung eine vulkanisierbare Kautschukzusammensetzung, die umfasst
a) einen oder mehrere mit Amin vernetzbare Kautschuke,
b) einen oder mehrere helle Füllstoffe und
c) ein oder mehrere Polyorganosiloxane mit mindestens zwei NH₂-Gruppen je Molekül,
wobei
(i) die Gesamtmenge an Komponente c) 0,1 bis 8 Gewichtsteile beträgt, bezogen auf 100 Gewichtsteile Komponente b), und
(ii) die Gesamtmenge an Organosilan in der Kautschukzusammensetzung höchstens 4 Gewichtsteile beträgt, bezogen auf 100 Gewichtsteile Komponente b).

Die vulkanisierbare Kautschukzusammensetzung wird vorzugsweise hergestellt durch Mischen von a) einem oder mehreren mit Amin vernetzbaren Kautschuken, b) einem oder mehreren hellen Füllstoffen und c) einem oder mehreren Polyorganosiloxanen mit mindestens zwei NH₂-Gruppen je Molekül, und gegebenenfalls Zumischen der optional vorhandenen und nachfolgend beschriebenen weiteren Bestandteile.

### 1) Vulkanisierbare Kautschukzusammensetzung

### a) Mit Amin vernetzbarer Kautschuk

Die erfindungsgemäße vulkanisierbare Kautschukzusammensetzung umfasst a) einen oder mehrere mit Amin vernetzbare Kautschuke. Der mit Amin vernetzbare Kautschuk ist vorzugsweise ausgewählt aus AEM-, ACM- und HNBR-Kautschuken.

**ACM-Kautschuke** sind Copolymere bestehend aus bestimmten Acrylaten wie beispielsweise Ethylacrylat, n-Butylacrylat und Alkoxyethylacrylaten. Durch die Abstimmung der eingesetzten Acrylate und von deren Mengenverhältnis werden die gewünschten Eigenschaften wie Temperaturstabilität oder Beständigkeit gegen bestimmten Fluids im Motorraum eines Autos erreicht. Beispielhafte Acrylatkautschuke sind in der EP 2 660 285 A1 beschrieben.

In die Polymerkette von ACM-Kautschuken ist eine Vernetzungsstelle eingebaut, wie beispielsweise eine Carboxylgruppe. Es sind auch ACM-Typen verfügbar, die mittels Diaminen vernetzt werden können, wobei das verwendete Vernetzungsmonomer nicht genannt wird. Durch die Auswahl der Monomere ist es möglich, die Temperaturstabilität von Acrylatkautschuken zu steigern. Solche Typen werden als HT-ACM Kautschuk vermarktet.

**AEM-Kautschuke** sind Copolymere von Ethylen und Methylacrylat und mit einer Vernetzungsstelle, typischerweise einer Carboxylfunktionalität. Durch das Einstellen eines bestimmten Mengenverhältnisses von Ethylen und Methylacrylat lassen sich die Eigenschaften bei bestimmten Temperaturen und die Beständigkeit gegen bestimmte Flüssigkeiten (Motoröle und aggressive Medien im Motorraum) steuern. Beispielsweise erhöht eine Erhöhung des Methylacrylatgehaltes die Beständigkeit gegen unpolare Motorenöle.

**HNBR-Kautschuke** basieren auf den Monomeren Acrylnitril und Butadien. Traditionell sind HNBR-Kautschuke mit Peroxiden und Schwefel vernetzbar. Sie werden durch den Gehalt an Acrylnitril beschrieben. Ein hoher Acrylnitrilgehalt führt zu einer besseren Beständigkeit gegen bestimmte flüssige Medien. Auch wird die Zugfestigkeit positiv beeinflusst. Je höher der Gehalt an Doppelbindungen in der Polymerkette ist, desto zugänglicher ist der jeweilige HNBR-Kautschuk für eine Schwefelvernetzung. HNBR-Kautschuke für die Vernetzung mit Diaminen verfügen neben den Monomeren Acrylnitril und Butadien in der Hauptkette noch über eine geeignete Vernetzungsstelle für die Aminvernetzung. HNBR-Kautschuke sind beispielsweise von Zeon erhältlich. Die verfügbaren Typen (Zetpol HP) unterscheiden sich im Acrylnitrilgehalt. Ein niedriger Acrylnitrilgehalt erhöht die Tieftemperaturstabilität, während ein hoher Acrylnitrilgehalt sehr gut geeignet ist, um die Beständigkeit gegen unpolare Flüssigkeiten, Mineralöle oder Schmierstoffe zu verbessern.

Bevorzugt beträgt die Menge an Komponente a), das heißt die Gesamtmenge an mit Amin vernetzbarem Kautschuk, 30 bis 90 Gew.-%, bezogen auf das Gewicht der vulkanisierbaren Kautschukzusammensetzung, vorzugsweise 40 bis 80 Gew.-%, insbesondere 50 bis 70 Gew.-%.

### b) Heller Füllstoff

Als Komponente b) enthält die erfindungsgemäße vulkanisierbare Kautschukzusammensetzung einen oder mehrere helle Füllstoffe. Bevorzugte helle Füllstoffe sind ausgewählt aus Kieselsäure, Silikaten, Calciumcarbonat, Bariumsulfat, Aluminiumhydroxid und Magnesiumhydroxid. Diese Füllstoffe können mit Silan oberflächenbehandelt sein.

Besonders bevorzugte helle Füllstoffe sind ausgewählt aus Kieselsäure, Silikaten und Calciumcarbonat.

Insbesondere handelt es sich bei Komponente b) um Kieselsäure.

Vorzugsweise ist Komponente b) in der erfindungsgemäßen vulkanisierbaren Kautschukzusammensetzung in einer Menge von 5 bis 200 Gewichtsteilen vorhanden, vorzugsweise 10 bis 100 Gewichtsteilen, wie 15 bis 90 Gewichtsteilen, bevorzugter 20 bis 80 Gewichtsteilen, insbesondere 30 bis 70, wie 40 bis 60 Gewichtsteilen, beispielsweise etwa 50 Gewichtsteilen, jeweils bezogen auf 100 Gewichtsteile Kautschuk.

### c) NH₂-funktionalisiertes Polyorganosiloxan

Darüber hinaus enthält die erfindungsgemäße vulkanisierbare Kautschukzusammensetzung c) ein oder mehrere funktionalisierte Polyorganosiloxane mit mindestens zwei NH₂-Gruppen je Molekül.

Vorzugsweise weist das Polyorganosiloxan mit mindestens zwei NH₂-Gruppen je Molekül die Struktureinheit I auf

[R¹ₓRₐSiO_{[4-(x+a)]/2}] (I).

In dieser Siloxaneinheit, die gemäß der vorliegenden Erfindung mit einem Rest mit NH₂-Gruppe funktionalisiert ist, ist
x gleich 1, 2 oder 3, und ist vorzugsweise 1;
a gleich 0, 1 oder 2, und ist vorzugsweise 1 oder 2, insbesondere 1;
R ein einwertiger Rest ausgewählt aus Methyl, Ethyl, Propyl, Phenyl oder Hydroxy, und R ist besonders bevorzugt Methyl oder Hydroxy, insbesondere Methyl; und
R¹ ein einwertiger organischer Rest mit NH₂-Funktionalisierung.
R¹ ist vorzugsweise ausgewählt aus
x) -R²-NH_{2;}
y) -R²-N(R³)-NH₂, und
z) -R²-N(R³)-R⁴-NH₂,
wobei
R² und R⁴ unabhängig voneinander eine Alkylen- oder Alkylenoxygruppe mit 1 bis 20 Kohlenstoffatomen sind, vorzugsweise eine Alkylengruppe mit 1 bis 5 Kohlenstoffatomen, und
R³ Wasserstoff oder eine Alkylgruppe mit 1 bis 5 Kohlenstoffatomen ist.

Vorzugsweise befinden sich die mindestens zwei NH₂-Gruppen je Polyorganosiloxanmolekül in verschiedenen Gruppen R¹. Besonders bevorzugt befinden sich die mindestens zwei NH₂-Gruppen je Polyorganosiloxanmolekül in verschiedenen Struktureinheiten I. Insbesondere befinden sich die mindestens zwei NH₂-Gruppen je Polyorganosiloxanmolekül in verschiedenen Struktureinheiten I^{D}.

Besonders bevorzugt ist R¹ x) -R²-NH₂, wobei R² eine Alkylengruppe mit 1 bis 5 Kohlenstoffatomen ist, vorzugsweise eine Alkylengruppe mit 2 bis 4 Kohlenstoffatomen, insbesondere eine Prop-1,3-diylgruppe. R¹ ist also besonders bevorzugt Aminopropyl, NH₂(CH₂)₃-.

Bevorzugte Struktureinheiten I mit x = 1 sind eine seitenständige (difunktionelle, brückenständige) Struktureinheit des Typs D mit a = 1:

[R¹RSiO_{2/2}] (I^{D})

und eine terminale (endständige) Struktureinheit I des Typs M mit a = 2:

[R¹R₂SiO_{1/2}] (I^{M}).

Es ist besonders bevorzugt, dass die erfindungsgemäß vorhandenen Gruppen R¹ mit NH₂-Funktionalität in seitenständigen Struktureinheiten des Typs I^{D} angeordnet sind. Derartige erfindungsgemäß eingesetzte Polyorganosiloxane sind leichter zugänglich als Polyorganosiloxane mit NH₂-Gruppen an terminalen Siloxangruppen (d.h. des Typs I^{M}).

Neben der erwähnten und gemäß der vorliegenden Erfindung vorhandenen funktionalisierten Struktureinheit I (insbesondere vom seitenständigen Typ I^{D}) mit einem Rest mit NH₂-Gruppe weisen erfindungsgemäß eingesetzte Polyorganosiloxane vorzugsweise darüber hinaus die seitenständige Struktureinheit II vom Typ D auf:

[R'₂SiO_{2/2}] (II^{D})

wobei die Reste R' gleich oder verschieden sind (und vorzugsweise gleich sind) und ausgewählt sind aus linearen, verzweigten oder cyclischen organischen Resten, die über ein Sauerstoffatom gebunden sein können, und wobei die Reste R' vorzugsweise Methyl, Ethyl, Propyl oder Phenyl sind, insbesondere Methyl.

Bevorzugt ist (sind) in dem erfindungsgemäß eingesetzten Polyorganosiloxan auch eine oder - was besonders bevorzugt ist - zwei terminale Struktureinheiten III vom Typ M vorhanden:

[R"₃SiO_{1/2}] (III^{M}),

wobei die Reste R" gleich oder verschieden sind und ausgewählt sind aus Hydroxy und linearen, verzweigten oder cyclischen organischen Resten, die über ein Sauerstoffatom gebunden sein können, und wobei die Reste R" vorzugsweise Hydroxy, Methyl, Ethyl, Propyl oder Phenyl sind, insbesondere Hydroxy oder Methyl. In einer besonders bevorzugten Ausführungsform sind die Reste R" gleich und sind Methylgruppen. In einer weiteren besonders bevorzugten Ausführungsform ist III^{M} gleich [(CH₃)₂(HO)SiO_{1/2}].

Eine bevorzugte Struktur eines erfindungsgemäß eingesetzten Polyorganosiloxans ist demnach wie folgt:

[I^{D}]ₘ[I^{M}]ₙ[II^{D}]ₒ[[III^{M}]₍₂₋ₙ₎,

wobei
(i) m im Bereich von 0 bis 40 liegt und n 0, 1 oder 2 sein kann, mit der Maßgabe, dass die Summe (m + n) mindestens 2 beträgt, und wobei die Summe (m + n) vorzugsweise im Bereich bis 20 liegt,
(ii) o im Bereich von 0 bis 1000 liegt und
(iii) die Summe (m + o + 2) mindestens 3 beträgt.

In einer bevorzugten Ausführungsform beträgt die Summe der funktionalisierten Siloxaneinheiten in den erfindungsgemäß eingesetzten Polyorganosiloxanen (m + n) 2,0 bis 15, bevorzugter 2,5 bis 10, wie beispielsweise 3,0 bis 8,0, insbesondere 4,0 bis 6,0.

In einer bevorzugten Ausführungsform ist n gleich Null (0), das heißt die Funktionalisierung R¹ ist in dem Polyorganosiloxan bevorzugt (im Wesentlichen ausschließlich) in seitenständigen Struktureinheiten I^{D} enthalten. In dieser bevorzugten Ausführungsform ist m 2,0 bis 15, bevorzugter 2,5 bis 10, wie beispielsweise 3,0 bis 8,0, insbesondere 4,0 bis 6,0.

Dabei sind die seitenständigen und NH₂-funktionalisierten Struktureinheiten I^{D} in dem erfindungsgemäß eingesetzten Polyorganosiloxan typischerweise und vorzugsweise nicht als Block angeordnet, sondern entlang der Polysiloxankette statistisch verteilt.

Für den Fachmann ist außerdem klar, dass die Parameter m, n und o Durchschnittswerte darstellen, weil die erfindungsgemäß eingesetzten Polyorganosiloxane bei der Herstellung typischerweise nicht als einheitliche Verbindungen erhalten werden.

In einer alternativ bevorzugten Ausführungsform ist n gleich 1 oder 2 und vorzugsweise 2, das heißt die Funktionalisierung R¹ ist in dem Polyorganosiloxan (zumindest auch) in monofunktionellen (endständigen, terminalen) Struktureinheiten I^{M} enthalten.

In einer weiteren bevorzugten Ausführungsform beträgt die Gesamtzahl der Siloxaneinheiten der erfindungsgemäß eingesetzten Polyorganosiloxane (m + o + 2) 25 bis 1000, bevorzugter 35 bis 300, insbesondere 45 bis 200, wie 55 bis 155.

Die Zahl der nicht mit Gruppen R¹ substituierten seitenständigen Siloxaneinheiten II^{D} (d.h. o) in den erfindungsgemäß eingesetzten Polyorganosiloxanen beträgt vorzugsweise 20 bis 1000, bevorzugter 30 bis 300, insbesondere 40 bis 200, wie 50 bis 150.

Erfindungsgemäß eingesetzte NH₂-funktionalisierte Polyorganosiloxane können als bei Raumtemperatur (25°C) flüssige Verbindungen mit einer hohen Viskosität vorliegen.

Vorzugsweise liegt die Gesamtmenge an erfindungsgemäß NH₂-funktionalisiertem Polyorganosiloxan, das heißt die Menge an Komponente c), im Bereich von 0,2 bis 7,0 Gewichtsteilen, vorzugsweise 0,5 bis 6,5 Gewichtsteilen, bevorzugter 1,0 bis 6,0 Gewichtsteilen, insbesondere 1,5 bis 5,5, wie 2,0 bis 5,0 Gewichtsteilen, jeweils bezogen auf 100 Gewichtsteile Komponente b).

In einer weiteren bevorzugten Ausführungsform beträgt die Gesamtmenge der Komponente c) 0,1 bis 5,0 Gewichtsteile, vorzugsweise 0,5 bis 4,5 Gewichtsteile, bevorzugter 0,8 bis 4,0 Gewichtsteile, bevorzugter 1,0 bis 3,5 Gewichtsteile, insbesondere 1,5 bis 3,0 Gewichtsteile, jeweils bezogen auf 100 Gewichtsteile Kautschuk (phr).

Verfahren zur Herstellung der erfindungsgemäß eingesetzten Polyorganosiloxane sind im Stand der Technik bekannt, wobei u.a. auf die EP 2 660 285 A1 verwiesen wird.

### d) Aminvernetzer

Vorzugsweise enthält die erfindungsgemäße vulkanisierbare Kautschukzusammensetzung ferner d) einen oder mehrere Aminvernetzer, wobei der Aminvernetzer vorzugsweise ein Diamin ist, bevorzugt ein aliphatisches oder ein aromatisches Diamin.

Vorzugsweise handelt es sich somit bei dem mit Amin vernetzbaren Kautschuk um einen mit Diamin vernetzbaren Kautschuk.

Bevorzugt ist das aliphatische Diamin ausgewählt aus Hexamethylendiamin und Hexamethylendiamincarbamat, wobei Komponente b) insbesondere Hexamethylendiamincarbamat ist. Bevorzugte aromatische Diamine sind 2,2-Bis[4-(4-aminophenoxy)phenyl]propan, 4,4-Diaminodicyclohexylmethan und 4,4-Diaminodiphenylether.

Erfindungsgemäß ist bevorzugt, dass die Menge der Komponente d) 0,1 bis 10 Gewichtsteile beträgt, vorzugsweise 0,2 bis 8 Gewichtsteile, bevorzugter 0,3 bis 7 Gewichtsteile, jeweils bezogen auf 100 Gewichtsteile Kautschuk.

### Weitere Bestandteile

Neben den bereits erwähnten Bestandteilen a) bis d) enthält die erfindungsgemäße vulkanisierbare Kautschukzusammensetzung ferner vorzugsweise
e) 0 - 200 Gewichtsteile einen oder mehrere andere Füllstoffe, bevorzugt Ruß, bezogen auf 100 Gewichtsteile Kautschuk (phr),
f) 0 - 100 phr Weichmacher,
g) 0 - 8 phr Verarbeitungshilfe, wobei die Verarbeitungshilfe vorzugsweise ausgewählt aus Stearinsäure, Octadecylamin, Phosphorsäureestern und Gemischen davon,
h) 0 - 8 phr Alterungsschutzmittel und/oder
i) 0 - 10 phr Beschleunigungssystem.

### j) Begrenzte Menge Organosilan

Erfindungsgemäß ist die Menge an Organosilan beschränkt, und zwar insbesondere die Menge an mit Aminogruppen funktionalisiertem Organosilan.

Gemäß der vorliegenden Erfindung ist die Anwesenheit eines oder mehrerer Polyorganosiloxane mit mindestens zwei NH₂-Gruppen je Molekül vorgeschrieben. Polyorganosiloxane zeichnen sich dadurch aus, dass sie Si-O-Ketten enthalten, d.h. dass die Siliziumatome mit benachbarten Siliziumatomen durch ein Sauerstoffatom verknüpft sind. Demgegenüber zeichnen sich Organosilane, deren Menge erfindungsgemäß beschränkt ist, dadurch aus, dass sie keine Si-O-Si-Bindungen besitzen. Beispiele für Organosilane, deren Menge erfindungsgemäß beschränkt ist, sind 3-Aminopropyltriethoxysilan, 3-Aminopropyltrimethoxysilan, 3-Aminopropylmethyldiethoxysilan, Bis-(3-triethoxysilylpropyl)amin und Bis-(3-trimethoxysilylpropyl)amin.

Die Gesamtmenge an Organosilan in der erfindungsgemäßen vulkanisierbaren Kautschukzusammensetzung beträgt höchstens 4 Gewichtsteile, bezogen auf 100 Gewichtsteile Komponente b). Vorzugsweise beträgt die Gesamtmenge höchstens 3,5 Gewichtsteile, wie höchstens 3 Gewichtsteile, bevorzugter höchstens 2,5 Gewichtsteile, wie höchstens 2,0 Gewichtsteile oder höchstens 1,5 Gewichtsteile, jeweils bezogen auf 100 Gewichtsteile Komponente b).

Besonders bevorzugt beträgt die Gesamtmenge an Organosilan in der erfindungsgemäßen Kautschukzusammensetzung höchstens 1,0 Gewichtsteile, besonders bevorzugt höchstens 0,7 Gewichtsteile, insbesondere höchstens 0,5 oder höchstens 0,3 Gewichtsteile, jeweils bezogen auf 100 Gewichtsteile Komponente b).

In einer weiteren bevorzugten Ausführungsform ist die Gesamtmenge an Organosilan in der Kautschukzusammensetzung beschränkt auf höchstens 2 Gewichtsteile bezogen auf 100 Gewichtsteile Kautschuk. Bevorzugt beträgt die Menge an Organosilan höchstens 1,5 Gewichtsteile, wie höchstens 1,0 Gewichtsteile, insbesondere höchstens 0,5 Gewichtsteile, jeweils bezogen auf 100 Gewichtsteile Kautschuk.

### 2) Verwendung der mit NH₂-Gruppen funktionalisierten Polyorganosiloxane

Die mit mindestens zwei NH₂-Gruppen funktionalisierten Polyorganosiloxane werden erfindungsgemäß zur Verbesserung des Druckverformungsrests eingesetzt. In einem weiteren Aspekt betrifft die Erfindung somit die Verwendung von Polyorganosiloxanen mit mindestens zwei NH₂-Gruppen je Molekül in einer vulkanisierbaren Kautschukzusammensetzung, die umfasst
a) einen oder mehrere mit Amin vernetzbare Kautschuke und
b) einen oder mehrere helle Füllstoffe,
wobei
(i) die Gesamtmenge an Polyorganosiloxan mit mindestens zwei NH₂-Gruppen je Molekül in der Kautschukzusammensetzung 0,1 bis 8 Gewichtsteile beträgt, bezogen auf 100 Gewichtsteile Komponente b), und
(ii) die Gesamtmenge an Organosilan in der Kautschukzusammensetzung höchstens 4 Gewichtsteile beträgt, bezogen auf 100 Gewichtsteile Komponente b),
zur Senkung des Druckverformungsrests des vulkanisierten Kautschuks.

Die Erfindung betrifft darüber hinaus ein Verfahren zur Vulkanisation von Kautschuk, bei dem die erfindungsgemäße vulkanisierbare Kautschukzusammensetzung bei einer Temperatur von beispielsweise 120°C bis 250°C vulkanisiert wird.

### 3) Vulkanisierter Kautschuk und Artikel

In einem weiteren Aspekt betrifft die Erfindung einen vulkanisierten Kautschuk, der durch Vulkanisieren der vulkanisierbaren Kautschukzusammensetzung erhältlich ist.

In einem weiteren Aspekt betrifft die Erfindung einen Artikel, der den erfindungsgemäßen vulkanisierten Kautschuk umfasst. Beispielhafte Artikel sind solche Komponenten, die über längere Zeiträume hohen Temperaturen ausgesetzt werden und darüber hinaus gegen aggressive Medien beständig sein müssen. Dies ist insbesondere in Automobilanwendungen der Fall, beispielsweise für Schläuche im Motorraum, Dichtungen im Motorraum, Ölwannendichtungen, Gelenkmanschetten, Isolierungen für Verbindungsleitungen oder für Dämpfungselemente.

Die Vorteile der Erfindung ergeben sich insbesondere aus den folgenden Beispielen. Alle Mengenangaben beziehen sich, wenn nichts Anderes angegeben ist, auf das Gewicht.

### Beispiele

Es wurden die folgenden Chemikalien eingesetzt (Tabelle 1).

**Tabelle 1**

| Markenname | Erläuterung | Hersteller/Lieferant |
|---|---|---|
| Zetpol ZPT 136 | HNBR-Kautschuk für die Aminvernetzung (35% Acrylnitrilgehalt), Iodzahl: 12 g/100 g) | Zeon |
| Hytemp AR 12 | HT-ACM Kautschuk | Zeon |
| Vamac GLS | AEM-Kautschuk, Mooney Viskosität ML1'+4' bei 100°C = 18,5 MU | DuPont |
| Ultrasil VN2 GR | Fällungskieselsäure mit einer spezifischen Oberfläche von 130 m²/g (Mehrpunktmethode in Anlehnung an ISO 9277) | Evonik Industries |
| Amino-Silan | 3-Aminopropyltriethoxysilan | Evonik Industries |
| Alcanplast TOTM | Trimellithsäuretrimethylester, Weichmacher | ChemSpec Ltd. |
| Alchem MBPA (CDPA) | 4-(1-methyl-1-phenylethyl)-N-[4-(1-methyl-1-phenyl-ethyl)-phenyl]anilin, Alterungsschutzmittel | ChemSpec Ltd. |
| Edenor ST1 | Stearinsäure, Verarbeitungshilfe | Emery Oleochemicals |
| Vanfre VAM | Polyoxyethylen-Octadecylether-Phosphat, Verarbeitungshilfe | Vanderbilt Chemicals LLC |
| DIAK#1 | Hexamethylendiamincarbamat, Vernetzer | DuPont Chemicals |
| Rhenogran XLA-60 | Beschleuniger für die Aminvernetzung | RheinChemie Rheinau GmbH, Mannheim |
| Luvomaxx CDPA | Alterungsschutzmittel 4-(1-methyl-1-phenylethyl)-N-[4-(1-methyl-1-phenyl-ethyl)phenyl]-anilin | Lehmann & Voss & Co. |
| Armeen 18 D | Octadecylamin, Verarbeitungshilfe | AkzoNobel Deutschland |
| Struktol KW 759 | Polyetheradipat, Weichmacher | Schill+Seilacher "Struktol" GmbH |
| Vulcofac ACT 55 | Aktivator/Beschleuniger für die Aminvernetzung, tertiärer Aminkomplex | Safic Alcan |
| Corax N550 | Ruß | Orion Engineered Carbons |

Ferner wurden die folgenden Polyorganosiloxane erfindungsgemäß eingesetzt:

### POS 1-4

Ein Polydimethylsiloxan mit x Dimethylsiloxaneinheiten, das zudem in der Seitenkette statistisch verteilt y primäre Amine mit einem Propyl-Spacer (d.h. R¹ ist Aminopropyl) trägt:

| | | |
|---|---|---|
| POS 1,2: | x = 100 | y = 4 |
| POS 3: | x = 100 | y = 2 |
| POS 4: | x = 200 | y = 8 |

### POS 5

Ein Polydimethylsiloxan mit 100 Dimethylsiloxaneinheiten, das zudem in der Seitenkette statistisch verteilt 4 Gruppen vom Typ Aminopropyl-Aminoethyl trägt. Folglich befinden sich in jeder funktionellen Gruppe eine sekundäre Amin (NH)- und eine primäre Amin (NH₂)-Gruppe.

### Testmethoden

**Mooney Viskosität:** ISO 289-1 Unvulkanisierter Kautschuk - Bestimmungen unter Verwendung eines Scherscheiben-Viskosimeters - Teil 1: Bestimmung der Mooney-Viskosität
**Shore A-Härte:** DIN ISO 7619-1:2012-02 Elastomere oder thermoplastische Elastomere - Bestimmung der Eindringhärte - Teil 1: Durometer-Verfahren (Shore-Härte)
**Zugfestigkeit/Spannungswerte/Bruchdehnung:** DIN 53504 Prüfung von Kautschuk und Elastomeren - Bestimmung von Zugfestigkeit, Zugfestigkeit, Reißdehnung und Spannungswerten im Zugversuch
**Weiterreißwiderstand:** DIN ISO 34-1 DIN Elastomere oder thermoplastische Elastomere - Bestimmung des Weiterreißwiderstandes - Teil 1: Streifen-, winkel- und bogenförmige Probekörper
**Druckverformungsrest:** DIN ISO 815 Elastomere oder thermoplastische Elastomere - Bestimmung des Druckverformungsrestes - Teil 1: Bei Umgebungstemperaturen oder erhöhten Temperaturen

### Beispiel 1 (mit HNBR-Kautschuk)

Eine Mischung von 100 Gewichtsteilen (= 100 phr) HNBR-Kautschuk (Zetpol ZPT 136), 50 Gewichtsteilen Kieselsäure (Ultrasil VN2 GR), 5 Gewichtsteilen Weichmacher (Alcanplast TOTM), 1,5 Gewichtsteilen Alchem MBPA (CDPA), 1 Gewichtsteil Stearinsäure und 1 Gewichtsteil Verarbeitungshilfe (Vanfre VAM) wurde im Upsidedown-Mischverfahren in einem Labor-Innenmischer hergestellt und auf dem Walzwerk zu einem Fell ausgezogen. Der Laborinnenmischer hatte ein Volumen von 1,5 l und eine tangentiale Rotorgeometrie (1,5 N). Die Starttemperatur betrug 60°C und die Geschwindigkeit 55 Umdrehungen/Minute.

Im zweiten Herstellungsschritt wurden auf dem Walzwerk 4 Gewichtsteile Beschleuniger (Rhenogran XLA-60), 2,6 Gewichtsteile des Vernetzers (DIAK#1) sowie die eingesetzten Aminofunktionalisierten Polyorganosiloxane aufgemischt. Die Temperatur des Walzwerks betrug 50°C (Wasserkühlung).

### Beispiel 2 (mit HNBR Kautschuk)

In einem Laborinnenmischer GK 1,5N wurden bei einer Starttemperatur von 50°C und einer Geschwindigkeit von 55 Umdrehungen/Minute 100 Gewichtsteile HNBR-Kautschuk (Zetpol ZPT 136) vorgelegt. Nach 30 Sekunden wurden 2/3 der Kieselsäuremenge (Ultrasil VN2 GR), der Weichmacher (TOTM), die Verarbeitungshilfen (Vanfre VAM und Stearinsäure) sowie das Alterungsschutzmittel (Alchem MBPA (CDPA)) vorgelegt. Nach 90 Sekunden (weiteren 60 Sekunden) wurde 1/3 der Kieselsäuremenge (VN2 GR) und (soweit vorgesehen) das NH₂ funktionalisierte Polyorganosiloxan zugegeben. Nach 150 Sekunden wurde der Stempel belüftet und gefegt und nach 240 Sekunden (weiteren 90 Sekunden) wurde der Mischvorgang beendet und die Mischung ausgeworfen.

Im zweiten Herstellungsschritt wurden auf dem Walzwerk 4 Gewichtsteile Beschleuniger (Rheogran XLA-60) und 2,6 Gewichtsteile des Vernetzers (DIAK#1) aufgemischt. Die Temperatur des Walzwerks betrug 50°C (Wasserkühlung).

### Beispiel 3 (mit HT-ACM Kautschuk)

Eine Mischung von 100 Gewichtsteilen (= 100 phr) HT-ACM-Kautschuk (Hytemp AR 12), 50 Gewichtsteilen Kieselsäure (Ultrasil VN2 GR), 5 Gewichtsteilen Weichmacher (Alcanplast TOTM), 1,5 Gewichtsteilen (Alchem MBPA (CDPA)), 1 Gewichtsteil Stearinsäure und 1 Gewichtsteil Verarbeitungshilfe (Vanfre VAM) wurde im Upsidedown-Mischverfahren in einem Laborinnenmischer hergestellt und auf dem Walzwerk zu einem Fell ausgezogen. Der Laborinnenmischer hatte ein Volumen von 1,5 l und eine tangentiale Rotorgeometrie (1,5 N). Die Starttemperatur betrug 30°C und die Geschwindigkeit 70 Umdrehungen/Minute.

Im zweiten Herstellungsschritt wurden auf dem Walzwerk 2 Gewichtsteile Beschleuniger (Rheogran XLA-60) und 0,5 Gewichtsteile des Vernetzers (DIAK#1) aufgemischt. Die Temperatur des Walzwerks betrug ca. 45°C (Wasserkühlung).

Für die Vulkanisation wurden die 2 mm-Prüfplatten 20 min lang und die 6 mm-Prüfkörper 30 min lang bei 190°C vulkanisiert. Alle vulkanisierten Prüfkörper wurden anschließend 4 h lang bei 175°C im Trockenschrank getempert.

Zusammensetzung (Gewichtsteile, Tabelle 3):

**Tabelle 3**

| | A1 | A2 |
|---|---|---|
| Hytemp AR 12 (HAT-ACM) | 100 | 100 |
| Ultrasil VN 2 GR | 50 | 50 |
| Alchem 445 (CDPA) | 2 | 2 |
| Stearinsäure | 1 | 1 |
| Vanfre VAM | 1 | 1 |
| POS1 | | 1 |
| Rhenogran XLA-60 | 2 | 2 |
| Diak No 1 | 0,6 | 0,6 |
| Summe | 156,6 | 157,6 |

Es wurden die folgenden Ergebnisse erhalten (Tabelle 4):

**Tabelle 4**

| | A1 | A2 |
|---|---|---|
| Shore A Härte [Sh E] | 63 | 63 |
| Zugfestigkeit [MPa] | 9,8 | 11,4 |
| Reißdehnung [%] | 371 | 317 |
| Modul 100% [MPa] | 2,2 | 3,1 |
| Modul 300% [MPa] | 7,4 | 10,5 |
| Weiterreißwiderstand [kN/m] | 4,4 | 3,3 |
| Druckverformungsrest [%], nach 168 Stunden bei 175°C | 94,5 | 70,7 |

Der Druckverformungsrest (DVR) ist bei der HT-ACM-Kautschukzusammensetzung, die das erfindungsgemäß eingesetzte Polyorganosiloxan POS1 enthält (A1), deutlich verbessert. Gegenüber der Kontrollzusammensetzung ohne Additiv (A2) verringert sich der DVR um 23,8%. Ebenfalls verbessert wird der Wert für die Zugfestigkeit (Erhöhung von 9,8 MPa auf 11,4 MPa). Der verbesserte Druckverformungsrest spiegelt sich auch in niedrigeren Werten für die Reißdehnung (von 371% auf 317%) und für den Weiterreißwiderstand wieder.

### Beispiel mit HNBR #1:

In diesen HNBR-Kautschukzusammensetzungen wurden die erfindungsgemäß eingesetzten Polyorganosiloxane in der ersten Stufe eingemischt (Tabelle 5). Für die Vulkanisation wurden die 2 mm-Prüfplatten 20 min lang und die 6 mm-Prüfkörper 22 min lang bei 170°C vulkanisiert. Alle vulkanisierten Prüfkörper wurden anschließend 4 h lang bei 175°C im Trockenschrank getempert.

Es wurden ein erfindungsgemäß eingesetztes Polyorganosiloxan in zwei unterschiedlichen Konzentrationen in eine HNBR-Kautschukzusammensetzung mit Kieselsäure getestet, gegenüber einer HNBR-Kautschukzusammensetzung mit einem Amino-Silan und gegenüber einer HNBR-Kontrollzusammensetzung, die weder Amino-Silan noch erfindungsgemäß eingesetztes Polyorganosiloxan enthielt.

**Tabelle 5**

| | B1 | B2 | B3 | B4 |
|---|---|---|---|---|
| Zetpol ZPT 136 | 100 | 100 | 100 | 100 |
| Ultrasil VN 2 GR | 50 | 50 | 50 | 50 |
| Alcanplast TOTM | 5 | 5 | 5 | 5 |
| Alchem MBPA (CDPA) | 1,5 | 1,5 | 1,5 | 1,5 |
| Stearinsäure | 1 | 1 | 1 | 1 |
| Vanfre VAM | 1 | 1 | 1 | 1 |
| POS1 | | 2 | | |
| POS5 | | | 4 | |
| Amino-Silan | | | | 1 |
| Diak No 1 | 2,6 | 2,6 | 2,6 | 2,6 |
| Rhenogran XLA-60 | 4 | 4 | 4 | 4 |
| Summe | 165,1 | 167,1 | 169,1 | 166,1 |

Die Ergebnisse sind nachfolgend in Tabelle 6 dargestellt.

**Tabelle 6**

| | B1 | B2 | B3 | B4 |
|---|---|---|---|---|
| Shore A-Härte [Sh E] | 68 | 68 | 70 | 72 |
| Zugfestigkeit [MPa] | 21,5 | 23,6 | 23,6 | 16,2 |
| Modul 100% [MPa] | 5,2 | 8 | 8,8 | n.a. |
| Reißdehnung [%] | 277 | 209 | 185 | 96 |
| Druckverformungsrest [%], nach 168 Stunden bei 175% | 44,7 | 29,5 | 27,4 | 24,1 |
| Druckverformungsrest [%], nach 168 Stunden bei 150°C | 31,8 | 17,9 | 21,6 | 16,4 |

Durch die Verwendung des Amino-Silans (Kautschukzusammensetzung B4) ist es möglich, den Druckverformungsrest deutlich gegenüber der Kontrollzusammensetzung B1 zu verringern. Allerdings erreichen die Werte für Zugfestigkeit und Reißdehnung von B4 nicht die Ausgangswerte der Zusammensetzung B1. Insbesondere die Reißdehnung wird deutlich verringert, auf Werte von ca. 100%, was für eine praktische Anwendung zu niedrig wäre. Zwar sind niedrige Werte für den Druckverformungsrest gewünscht, jedoch nur in Kombination mit akzeptablen Resultaten für die Reißdehnung, die hier deutlich über 100% liegen. Hingegen wird durch die Zugabe eines erfindungsgemäß eingesetzten Polyorganosiloxans erreicht, dass die Zugfestigkeiten sogar über dem Wert der Kontrollzusammensetzung B1 liegen (siehe die Kautschukzusammensetzungen B2 und B3). Außerdem werden geringere Druckverformungsreste erzielt, und zwar in Kombination mit Reißdehnungen, die zwar gegenüber Zusammensetzung B1 verringert sind, allerdings deutlich höher als bei Zusammensetzung B4.

### Beispiel mit HNBR #2:

In diesen HNBR-Kautschukzusammensetzungen wurden die erfindungsgemäß eingesetzten Polyorganosiloxane in der ersten Stufe eingemischt (Tabelle 7). Für die Vulkanisation wurden die 2 mm-Prüfplatten 20 min lang und die 6 mm-Prüfkörper 22 min lang bei 170°C vulkanisiert. Alle vulkanisierten Prüfkörper wurden anschließend 4 h lang bei 175°C im Trockenschrank getempert.

Es wurde eine Untersuchung durchgeführt, bei der verglichen wurden:
- die Kautschukzusammensetzungen, die niedrige und hohe Dosierungen Amino-Silan beinhalten,
- eine Kautschukzusammensetzung mit einer Kombination von Amino-Silan mit einem erfindungsgemäß eingesetzten Polyorganosiloxan sowie
- eine Kautschukzusammensetzung, die ausschließlich ein erfindungsgemäß eingesetztes Polyorganosiloxan enthielt.

**Tabelle 7**

| | C1 | C2 | C3 |
|---|---|---|---|
| Zetpol ZPT 136 | 100 | 100 | 100 |
| Ultrasil VN 2 GR | 50 | 50 | 50 |
| Alcanplast TOTM | 5 | 5 | 5 |
| Alchem MBPA (CDPA) | 1,5 | 1,5 | 1,5 |
| Stearinsäure | 1 | 1 | 1 |
| Vanfre VAM | 1 | 1 | 1 |
| Amino-Silan | 1,5 | 0,5 | 0,5 |
| POS5 | | | 2 |
| Diak No 1 | 2,6 | 2,6 | 2,6 |
| Rhenogran XLA-60 | 4 | 4 | 4 |
| Summe | 166,6 | 165,6 | 167,6 |

Je höher die Dosierung des Amino-Silans, desto niedriger ist die Zugfestigkeit (vgl. Tabelle 8). Die Werte für die HNBR-Kautschukzusammensetzung C1, die 1,5 phr Amino-Silan enthielt und der HNBR-Kautschukzusammensetzung C2, die 0,5 phr Amino-Silan enthält, betrugen 13,4 MPa und 21,0 MPa. Der für die HNBR-Kautschukzusammensetzung (mit 1,0 phr Amino-Silan) ermittelte Wert von 16,2 MPa liegt ungefähr zwischen den Zugfestigkeiten von C1 und C2 (siehe B4).

Durch die Zugabe eines erfindungsgemäß eingesetzten Polyorganosiloxans verringert sich die Zugfestigkeit leicht, siehe HNBR-Kautschukzusammensetzung C3, in der zu 0,5 phr Amino-Silan zusätzlich 2 phr des erfindungsgemäß eingesetzten Polyorganosiloxans zugegeben wurden.

Außerdem gelingt es durch eine Verringerung der Amino-Silan-Dosierung von 1,0 phr auf 0,5 phr nur bedingt, die Zugfestigkeit bzw. Reißdehnung zu verbessern, siehe B4 und C2.

Die Werte, die mit dem erfindungsgemäß eingesetzten Polyorganosiloxan erreicht werden, bleiben unerreicht in Bezug auf die Kombination von Zugfestigkeit, Reißdehnung sowie Druckverformungsrest (siehe B2).

**Tabelle 8**

| | C1 | C2 | C3 |
|---|---|---|---|
| Shore A Härte [Sh E] | 72 | 72 | 71 |
| Zugfestigkeit [MPa] | 13,4 | 21,9 | 19,9 |
| Modul 100% [MPa] | n.a. | 14,0 | 14,9 |
| Reißdehnung [%] | 86 | 133 | 118 |
| Druckverformungsrest [%], nach 168 Stunden bei 150°C | 17,6 | 17,4 | 13,6 |

### Beispiel mit HNBR#3:

In diesen HNBR-Kautschukzusammensetzungen wurden die erfindungsgemäß eingesetzten Polyorganosiloxane in der zweiten Stufe auf dem Walzwerk mit dem Vernetzungssystem der HNBR-Kautschukzusammensetzung zugeführt (Tabelle 9).

Für die Vulkanisation wurden die 2 mm-Prüfplatten 20 min lang und die 6 mm-Prüfkörper 22 min lang bei 170°C vulkanisiert. Alle vulkanisierten Prüfkörper wurden anschließend 4 h lang bei 175°C im Trockenschrank getempert.

Die HNBR-Kautschukzusammensetzungen D1 bis D5 beinhalten eine Kontrollzusammensetzung D1 ohne erfindungsgemäß eingesetztes Polyorganosiloxan (vgl. Tabelle 10). Die HNBR-Kautschukzusammensetzungen D2 bis D5 enthielten unterschiedliche erfindungsgemäß eingesetzte Polyorganosiloxane mit unterschiedlicher Anzahl von Funktionalitäten und in unterschiedlichen Konzentrationen.

Es wurden folgende Untersuchungen durchgeführt:
- Unterschiedliche Konzentrationen eines erfindungsgemäß eingesetzten Polyorganosiloxans (Vergleich D2 und D3)
- Unterschiedliche Anzahl an NH₂-Funktionalisierungen an erfindungsgemäß eingesetzten Polyorganosiloxanen bei gleicher Konzentration in der jeweiligen HNBR-Kautschukzusammensetzung (Vergleich D2 und D4)
- Gleiches Verhältnis von Amin-Funktionalitäten zur Kettenlänge des erfindungsgemäß eingesetzten Polyorganosiloxans bei gleicher eingesetzter Konzentration in der HNBR-Kautschukzusammensetzung (D2 und D5).

**Tabelle 10**

| | D1 | D2 | D3 | D4 | D5 |
|---|---|---|---|---|---|
| Zetpol ZPT 136 | 100 | 100 | 100 | 100 | 100 |
| Ultrasil VN 2 GR | 50 | 50 | 50 | 50 | 50 |
| Alcanplast TOTM | 5 | 5 | 5 | 5 | 5 |
| Alchem MBPA (CDPA) | 1,5 | 1,5 | 1,5 | 1,5 | 1,5 |
| Stearinsäure | 1 | 1 | 1 | 1 | 1 |
| Vanfre VAM | 1 | 1 | 1 | 1 | 1 |
| Rhenogran XLA-60 | 4 | 4 | 4 | 4 | 4 |
| Diak No 1 | 2,6 | 2,6 | 2,6 | 2,6 | 2,6 |
| POS2 | | 4 | 2 | | |
| POS3 | | | | 4 | |
| POS4 | | | | | 4 |

Die Ergebnisse sind in Tabelle 11 dargestellt.

**Tabelle 11**

| | D1 | D2 | D3 | D4 | D5 |
|---|---|---|---|---|---|
| Shore A Härte [Sh E] | 67 | 68 | 68 | 66 | 68 |
| Zugfestigkeit [MPa] | 22,2 | 24,9 | 22,4 | 21,6 | 26,2 |
| Reißdehnung [%] | 284 | 203 | 220 | 249 | 217 |
| Modul 100% [MPa] | 4,4 | 7,8 | 6,6 | 5,4 | 6,5 |
| Weiterreißwiderstand [kN/m] | 5,5 | 2,8 | 3,8 | 3,6 | 2,9 |
| Druckverformungsrest [%], nach 168 Stunden bei 175°C | 38,1 | 22,2 | 23,5 | 24,9 | 22,1 |

Die Werte für die Zugfestigkeit deuten auf eine Abhängigkeit von der eingesetzten Konzentration sowie von der Anzahl der zur Verfügung stehenden NH₂-Gruppen pro Kette hin. Je höher die eingesetzte Konzentration an erfindungsgemäß eingesetztem Polyorganosiloxan in der HNBR-Kautschukzusammensetzung, desto niedriger ist der Druckverformungsrest. Die HNBR-Kautschukzusammensetzung D2 mit 4 phr erfindungsgemäß eingesetztem Polyorganosiloxan hat einen niedrigeren Druckverformungsrest als die Zusammensetzung D3, die lediglich 2 phr desselben erfindungsgemäß eingesetzten Polyorganosiloxans enthielt.

Wird die Anzahl der NH₂-Gruppen pro Polyorganosiloxanmolekül verändert, ergibt sich für erfindungsgemäß eingesetzte Polyorganosiloxane, die weniger NH₂-Gruppen pro Molekül tragen, ein höherer Druckverformungsrest, wenn die eingesetzte Konzentration in der HNBR-Kautschukzusammensetzung gleich ist (Vergleich D2 und D4).

Ist der Quotient aus Kettenlänge und Anzahl der vorhandenen NH₂-Gruppen in dem erfindungsgemäß eingesetzten Polyorganosiloxan gleich, ergibt sich für die jeweiligen HNBR-Kautschukzusammensetzungen ein ungefähr vergleichbarer Druckverformungsrest.

Die Werte für die Zugfestigkeiten sind ungefähr vergleichbar mit denen der Kontrollzusammensetzung D1, jedoch zeigt sich auch hier eine Tendenz zu höherer Zugfestigkeit, je mehr NH₂-Gruppen bei dem jeweiligen erfindungsgemäß eingesetzten Polyorganosiloxan vorhanden sind.

### Beispiel mit AEM-Kautschuk (Vamac)

Eine Mischung von 25 Gewichtsteilen Kieselsäure (Ultrasil VN2 GR), 30 Gewichtsteilen Ruß (N-550), 1,5 Gewichtsteilen Antioxidationsmittel (Luvomaxx CDPA), 10 Gewichtsteilen Weichmacher (Struktol KW 759), 1,5 Gewichtsteilen Stearinsäure, 1 Gewichtsteil Verarbeitungshilfe (Vanfre VAM), 0,5 Gewichtsteilen Verarbeitungshilfe Octadecylamin (Armeen 18 D) sowie für die Zusammensetzungen E2 und E3 jeweils 0,5 Gewichtsteile Amino-Silan wurde im Upsidedown-Mischverfahren in einen Labor-Innenmischer bei 40°C Starttemperatur und 50 Umdrehungen gegeben; nach 30 Sekunden wurden 100 Gewichtsteile (= 100 phr) AEM-Kautschuk (Vamac GLS) dazugegeben.

Zusammensetzung E5 enthielt kein Vanfre VAM und lediglich 1 phr Stearinsäure.

Nach weiteren 1:30 Minuten (insgesamt nach 2:00 Minuten) wurde im Fall der Kautschukzusammensetzungen E3 bis E5 (vgl. Tabelle 12) jeweils eine bestimmte Menge des erfindungsgemäß eingesetzten Polyorganosiloxans zugegeben und der Laborinnenmischer wieder verschlossen. Nach insgesamt 3:30 Minuten wurde der Mischvorgang beendet und die Kautschukzusammensetzung ausgeworfen. Unmittelbar danach wurde den Kautschukzusammensetzungen auf dem Walzwerk das Beschleunigungs- bzw. Vernetzungssystem zugeführt (Wasserkühlung, maximale Kühlung).

**Tabelle 12**

| | E1 | E2 | E3 | E4 | E5 |
|---|---|---|---|---|---|
| Vamac GLS | 100 | 100 | 100 | 100 | 100 |
| Ultrasil VN2 GR | 25 | 25 | 25 | 25 | 25 |
| Corax N-550 | 30 | 30 | 30 | 30 | 30 |
| Struktol KW 759 | 10 | 10 | 10 | 10 | 10 |
| Luvomaxx CDPA | 2 | 2 | 2 | 2 | 2 |
| Stearinsäure | 1,5 | 1,5 | 1,5 | 1,5 | 1 |
| Vanfre VAM | 1 | 1 | 1 | 1 | |
| Armeen 18D | 0,5 | 0,5 | 0,5 | 0,5 | 0,5 |
| Amino-Silan | | 0,5 | 0,5 | | |
| POS1 | | | 1 | 1 | 2 |
| Vulcofac ACT 55 | 2 | 2 | 2 | 2 | 2 |
| Diak No 1 | 1,5 | 1,5 | 1,5 | 1,5 | 1,5 |
| Summe | 173,5 | 174 | 175 | 174,5 | 174 |

Für die Vulkanisation wurden sämtliche Prüfkörper 10 min lang bei 180°C vulkanisiert. Alle vulkanisierten Prüfkörper wurden anschließend 4 h lang bei 175°C im Trockenschrank getempert. Die Ergebnisse sind in Tabelle 13 dargestellt.

**Tabelle 13**

| | E1 | E2 | E3 | E4 | E5 |
|---|---|---|---|---|---|
| Shore A Härte [Sh E] | 67 | 73 | 74 | 70 | 71 |
| Zugfestigkeit [MPa] | 16,3 | 16,1 | 15,8 | 17,2 | 17,2 |
| Reißdehnung [%] | 372 | 222 | 210 | 285 | 226 |
| Modul 100% [MPa] | 3,6 | 6,5 | 6,9 | 5 | 6,7 |
| Modul 300% [MPa] | | | | | |
| Weiterreißwiderstand [kN/m] | 6,8 | 5,5 | 5,2 | 5,3 | 5,3 |
| Druckverformungsrest [%], nach 70 h bei 150°C | 52,4 | 37,5 | 33,8 | 40,5 | 34,0 |

Es gelingt also durch die Zugabe von 1 Gewichtsteil erfindungsgemäß eingesetztem Polyorganosiloxan, die Shore A-Härte sowie die Zugfestigkeit zu verbessern (Vergleich E1 mit E4). Außerdem verbessert sich der Druckverformungsrest um 11,9%. Durch Zugabe von Amino-Silan in Beispiel E2 ist es außerdem möglich, die Shore A-Härte sowie den Druckverformungsrest zu steigern. Jedoch verbleibt der Wert für die Zugfestigkeit auf dem Niveau der Kontrollzusammensetzung E1 ohne Amino-Silan. Außerdem wird die Reißdehnung um 150% verringert.

Durch die Verwendung einer Kombination aus Amino-Silan und erfindungsgemäßem Polyorganosiloxan (E3) wird der Druckverformungsrest um weitere 3,7% verringert, im Vergleich mit Beispiel E2, das nur Amino-Silan enthält.

Die Zusammensetzung in Beispiel E4 mit dem erfindungsgemäß eingesetzten Polyorganosiloxan besitzt somit eine größere Zugfestigkeit und eine höhere Reißdehnung als die Zusammensetzung in Beispiel E2.

Eine Verdopplung der eingesetzten Menge Polyorganosiloxan in Beispiel E5 unter Verzicht auf ein Amino-Silan, 1 phr Vanfre VAM sowie 0,5 phr Stearinsäure führt zu einer Reduzierung des Druckverformungsrestes auf das Niveau des Beispiels E4 (mit Amino-Silan und Polyorganosiloxan).

## Patentansprüche

1. Vulkanisierbare Kautschukzusammensetzung, die umfasst
a) einen oder mehrere mit Amin vernetzbare Kautschuke,
b) einen oder mehrere helle Füllstoffe und
c) ein oder mehrere Polyorganosiloxane mit mindestens zwei NH₂-Gruppen je Molekül,
wobei
i) die Gesamtmenge an Komponente c) 0,1 bis 8 Gewichtsteile beträgt, bezogen auf 100 Gewichtsteile Komponente b), und
ii)die Gesamtmenge an Organosilan in der Kautschukzusammensetzung höchstens 4 Gewichtsteile beträgt, bezogen auf 100 Gewichtsteile Komponente b).

2. Vulkanisierbare Kautschukzusammensetzung nach Anspruch 1, wobei der mit Amin vernetzbare Kautschuk a) ausgewählt ist aus AEM-, ACM- und HNBR-Kautschuken.

3. Vulkanisierbare Kautschukzusammensetzung nach Anspruch 1 oder 2, wobei Komponente a) in einer Menge von 30 bis 90 Gew.-% vorhanden ist, bezogen auf das Gewicht der vulkanisierbaren Kautschukzusammensetzung.

4. Vulkanisierbare Kautschukzusammensetzung nach einem der vorhergehenden Ansprüche, wobei der helle Füllstoff ausgewählt ist aus Kieselsäure, Silikaten, Calciumcarbonat, Bariumsulfat, Aluminiumhydroxid und Magnesiumhydroxid, wobei der helle Füllstoff vorzugsweise ausgewählt ist aus Kieselsäure, Silikaten und Calciumcarbonat,
insbesondere wobei Komponente b) Kieselsäure ist.

5. Vulkanisierbare Kautschukzusammensetzung nach einem der vorhergehenden Ansprüche, wobei Komponente b) in einer Menge von 5 bis 200 Gewichtsteilen vorhanden ist, vorzugsweise 10 bis 100 Gewichtsteilen, wie 15 bis 90 Gewichtsteilen, bevorzugter 20 bis 80 Gewichtsteilen, insbesondere 30 bis 70, wie 40 bis 60 Gewichtsteilen, beispielsweise etwa 50 Gewichtsteilen, jeweils bezogen auf 100 Gewichtsteile Kautschuk.

6. Vulkanisierbare Kautschukzusammensetzung nach einem der vorhergehenden Ansprüche, wobei das Polyorganosiloxan mit mindestens zwei NH₂-Gruppen je Molekül die Struktureinheit I aufweist
[R¹ₓRₐSiO_{[4-(x+a)]/2}] (I),
wobei
x gleich 1, 2 oder 3 ist und vorzugsweise 1 ist,
a gleich 0, 1 oder 2 ist, vorzugsweise 1 oder 2 ist und insbesondere 1 ist,
R ein einwertiger Rest ausgewählt aus Methyl, Ethyl, Propyl, Phenyl oder Hydroxy ist, und R besonders bevorzugt Methyl oder Hydroxy ist, insbesondere Methyl, und
R¹ ein einwertiger organischer Rest mit NH₂-Funktionalisierung ist,
wobei R¹ vorzugsweise ausgewählt ist aus
x) -R²-NH_{2;}
y) -R²-N(R³)-NH₂, und
z) -R²-N(R³)-R⁴-NH₂, wobei
R² und R⁴ unabhängig voneinander eine Alkylen- oder Alkylenoxygruppe mit 1 bis 20 Kohlenstoffatomen sind, vorzugsweise eine Alkylengruppe mit 1 bis 5 Kohlenstoffatomen, und
R³ Wasserstoff oder eine Alkylgruppe mit 1 bis 5 Kohlenstoffatomen ist,
wobei R¹ insbesondere x) -R²-NH₂ ist und dabei R² eine Alkylengruppe mit 1 bis 5 Kohlenstoffatomen ist, vorzugsweise eine Alkylengruppe mit 2 bis 4 Kohlenstoffatomen, insbesondere eine Prop-1,3-diylgruppe.

7. Vulkanisierbare Kautschukzusammensetzung nach Anspruch 6, wobei das Polyorganosiloxan 2,5 bis 10,0 Struktureinheiten I aufweist, insbesondere 3,0 bis 8,0 Struktureinheiten I.

8. Vulkanisierbare Kautschukzusammensetzung nach einem der vorhergehenden Ansprüche, wobei Komponente c) in einer Menge von 0,2 bis 7,0 Gewichtsteilen vorhanden ist, vorzugsweise 0,5 bis 6,5 Gewichtsteilen, bevorzugter 1,0 bis 6,0 Gewichtsteilen, insbesondere 1,5 bis 5,5, wie 2,0 bis 5,0 Gewichtsteilen, jeweils bezogen auf 100 Gewichtsteile Komponente b).

9. Vulkanisierbare Kautschukzusammensetzung nach einem der vorhergehenden Ansprüche, die ferner d) einen oder mehrere Aminvernetzer enthält,
wobei der Aminvernetzer vorzugsweise ein Diamin ist, bevorzugt ein aliphatisches oder ein aromatisches Diamin.

10. Vulkanisierbare Kautschukzusammensetzung nach Anspruch 9, wobei das aliphatische Diamin ausgewählt ist aus Hexamethylendiamin und Hexamethylendiamincarbamat, wobei Komponente b) insbesondere Hexamethylendiamincarbamat ist.

11. Vulkanisierbare Kautschukzusammensetzung nach Anspruch 9, wobei das aromatische Diamin 2,2-Bis[4-(4-aminophenoxy)phenyl]propan, 4,4-Diaminodicyclohexylmethan oder 4,4-Diaminodiphenylether ist.

12. Vulkanisierbare Kautschukzusammensetzung nach einem der Ansprüche 9 bis 11, wobei Komponente d) in einer Gesamtmenge von 0,1 bis 10 Gewichtsteilen vorhanden ist, vorzugsweise 0,2 bis 8 Gewichtsteilen, bevorzugter 0,3 bis 7 Gewichtsteilen, jeweils bezogen auf 100 Gewichtsteile Kautschuk.

13. Vulkanisierbare Kautschukzusammensetzung nach einem der vorhergehenden Ansprüche, die ferner umfasst
e) 0 - 200 Gewichtsteile einen oder mehrere andere Füllstoffe, bevorzugt Ruß, bezogen auf 100 Gewichtsteile Kautschuk (phr),
f) 0 - 100 phr Weichmacher,
g) 0 - 8 phr Verarbeitungshilfe, wobei die Verarbeitungshilfe vorzugsweise ausgewählt aus Stearinsäure, Octadecylamin, Phosphorsäureestern und Gemischen davon,
h) 0 - 8 phr Alterungsschutzmittel und/oder
i) 0 - 10 phr Beschleunigungssystem.

14. Vulkanisierter Kautschuk, erhältlich durch Vulkanisieren der vulkanisierbaren Kautschukzusammensetzung gemäß einem der vorhergehenden Ansprüche.

15. Artikel, der den vulkanisierten Kautschuk gemäß Anspruch 14 umfasst.

16. Verwendung von Polyorganosiloxanen mit mindestens zwei NH₂-Gruppen je Molekül
in einer vulkanisierbaren Kautschukzusammensetzung, die umfasst
a) einen oder mehrere mit Amin vernetzbare Kautschuke und
b) einen oder mehrere helle Füllstoffe,
wobei
(i) die Gesamtmenge an Polyorganosiloxan mit mindestens zwei NH₂-Gruppen je Molekül 0,1 bis 8 Gewichtsteile beträgt, bezogen auf 100 Gewichtsteile Komponente b), und
(ii) die Gesamtmenge an Organosilan in der Kautschukzusammensetzung höchstens 4 Gewichtsteile beträgt, bezogen auf 100 Gewichtsteile Komponente b),
zur Senkung des Druckverformungsrests des vulkanisierten Kautschuks.

## Claims

1. Vulcanizable rubber composition, which comprises
a) one or more amine-crosslinkable rubbers,
b) one or more white fillers and
c) one or more polyorganosiloxanes with at least two NH₂ groups per molecule,
wherein
i) the total quantity of component c) is 0.1 to 8 parts by weight, relative to 100 parts by weight of component b), and
ii) the total quantity of organosilane in the rubber composition is at most 4 parts by weight, relative to 100 parts by weight of component b).

2. Vulcanizable rubber composition according to claim 1, wherein the amine-crosslinkable rubber a) is selected from AEM, ACM and HNBR rubbers.

3. Vulcanizable rubber composition according to claim 1 or 2, wherein component a) is present in a quantity of 30 to 90 wt.-%, relative to the weight of the vulcanizable rubber composition.

4. Vulcanizable rubber composition according to one of the preceding claims, wherein the white filler is selected from silica, silicates, calcium carbonate, barium sulphate, aluminium hydroxide and magnesium hydroxide,
wherein the white filler is preferably selected from silica, silicates and calcium carbonate,
in particular wherein component b) is silica.

5. Vulcanizable rubber composition according to one of the preceding claims, wherein component b) is present in a quantity of 5 to 200 parts by weight, preferably 10 to 100 parts by weight, such as 15 to 90 parts by weight, more preferably 20 to 80 parts by weight, in particular 30 to 70, such as 40 to 60 parts by weight, for example approximately 50 parts by weight, in each case relative to 100 parts by weight of rubber.

6. Vulcanizable rubber composition according to one of the preceding claims, wherein the polyorganosiloxane with at least two NH₂ groups per molecule has the structural unit I
[R¹ₓRaSiO_{[4-(x+a)]/2}] (I),
wherein
x is equal to 1, 2 or 3, and is preferably 1,
a is equal to 0, 1 or 2, is preferably 1 or 2 and in particular is 1,
R is a monovalent radical selected from methyl, ethyl, propyl, phenyl or hydroxy, and R is particularly preferably methyl or hydroxy, in particular methyl, and
R¹ is a monovalent organic radical with NH₂ functionalization,
wherein R¹ is preferably selected from
x) -R²-NH_{2;}
y) -R²-N(R³)-NH₂, and
z) -R²-N(R³)-R⁴-NH₂, wherein
R² and R⁴ independently of each other are an alkylene or alkyleneoxy group with 1 to 20 carbon atoms, preferably an alkylene group with 1 to 5 carbon atoms, and
R³ is hydrogen or an alkyl group with 1 to 5 carbon atoms,
wherein R¹ is in particular x) -R²-NH₂, and R² is an alkylene group with 1 to 5 carbon atoms, preferably an alkylene group with 2 to 4 carbon atoms, in particular a prop-1,3-diyl group.

7. Vulcanizable rubber composition according to claim 6, wherein the polyorganosiloxane has 2.5 to 10.0 structural units I, in particular 3.0 to 8.0 structural units I.

8. Vulcanizable rubber composition according to one of the preceding claims, wherein component c) is present in a quantity of 0.2 to 7.0 parts by weight, preferably 0.5 to 6.5 parts by weight, more preferably 1.0 to 6.0 parts by weight, in particular 1.5 to 5.5, such as 2.0 to 5.0 parts by weight, in each case relative to 100 parts by weight of component b).

9. Vulcanizable rubber composition according to one of the preceding claims, which further contains d) one or more amine crosslinkers,
wherein the amine crosslinker is preferably a diamine, preferably an aliphatic or an aromatic diamine.

10. Vulcanizable rubber composition according to claim 9, wherein the aliphatic diamine is selected from hexamethylenediamine and hexamethylenediamine carbamate, wherein component b) is in particular hexamethylenediamine carbamate.

11. Vulcanizable rubber composition according to claim 9, wherein the aromatic diamine is 2,2-bis[4-(4-aminophenoxy)phenyl]propane, 4,4-diaminodicyclohexylmethane or 4,4-diaminodiphenylether.

12. Vulcanizable rubber composition according to one of claims 9 to 11, wherein component d) is present in a total quantity of 0.1 to 10 parts by weight, preferably 0.2 to 8 parts by weight, more preferably 0.3 to 7 parts by weight, in each case relative to 100 parts by weight of rubber.

13. Vulcanizable rubber composition according to one of the preceding claims, which further comprises
e) 0 - 200 parts by weight of one or more other fillers, preferably carbon black, relative to 100 parts by weight of rubber (phr),
f) 0 - 100 phr of plasticizer,
g) 0 - 8 phr of processing aid, wherein the processing aid is preferably selected from stearic acid, octadecylamine, phosphoric acid esters and mixtures thereof,
h) 0 - 8 phr of aging protection agent and/or
i) 0 - 10 phr of acceleration system.

14. Vulcanized rubber, obtainable by vulcanizing the vulcanizable rubber composition according to one of the preceding claims.

15. Article, which comprises the vulcanized rubber according to claim 14.

16. Use of polyorganosiloxanes with at least two NH₂ groups per molecule
in a vulcanizable rubber composition, which comprises
a) one or more amine-crosslinkable rubbers and
b) one or more white fillers,
wherein
(i) the total quantity of polyorganosiloxane with at least two NH₂ groups per molecule is 0.1 to 8 parts by weight, relative to 100 parts by weight of component b), and
(ii) the total quantity of organosilane in the rubber composition is at most 4 parts by weight, relative to 100 parts by weight of component b),
to reduce the compression set of the vulcanized rubber.

## Revendications

1. Composition de caoutchouc vulcanisable, qui comprend
a) un ou plusieurs caoutchoucs réticulables par une amine,
b) une ou plusieurs charges claires et
c) un ou plusieurs polyorganosiloxanes ayant au moins deux groupes NH₂ par molécule,
dans laquelle
i) la quantité totale du composant c) est de 0,1 à 8 parties en poids pour 100 parties en poids du composant b), et
ii) la quantité totale de l'organosilane dans la composition de caoutchouc est au plus de 4 parties en poids, pour 100 parties en poids du composant b).

2. Composition de caoutchouc vulcanisable selon la revendication 1, dans laquelle le caoutchouc réticulable par une amine a) est choisi parmi les caoutchoucs AEM, ACM et HNBR.

3. Composition de caoutchouc vulcanisable selon la revendication 1 ou 2, dans laquelle le composant a) est présent en une quantité de 30 à 90 % en poids, par rapport au poids de la composition de caoutchouc vulcanisable.

4. Composition de caoutchouc vulcanisable selon l'une des revendications précédentes, dans laquelle la charge claire est choisie parmi la silice, les silicates, le carbonate de calcium, le sulfate de baryum, l'hydroxyde d'aluminium et l'hydroxyde de magnésium,
la charge claire étant de préférence choisie parmi la silice, les silicates et le carbonate de calcium,
le composant b) étant en particulier la silice.

5. Composition de caoutchouc vulcanisable selon l'une des revendications précédentes, dans laquelle le composant b) est présent en une quantité de 5 à 200 parties en poids, de préférence de 10 à 100 parties en poids, comme 15 à 90 parties en poids, d'une manière plus préférée de 20 à 80 parties en poids, en particulier de 30 à 70, comme 40 à 60 parties en poids, par exemple d'environ 50 parties en poids, dans chaque cas pour 100 parties en poids du caoutchouc.

6. Composition de caoutchouc vulcanisable selon l'une des revendications précédentes, dans laquelle le polyorganosiloxane ayant au moins deux groupes NH₂ par molécule présente le motif structural (I)
[R¹ₓRₐSiO_{[4-(x+a)]/2}] (I)
dans laquelle
x vaut 1, 2 ou 3 et de préférence 1,
a vaut 0, 1 ou 2, de préférence 1 ou 2 et en particulier 1,
R est un radical monovalent choisi parmi les radicaux méthyle, éthyle, propyle, phényle ou hydroxy, et R est d'une manière particulièrement préférée le groupe méthyle ou hydroxy, en particulier méthyle, et
R¹ est un radical organique monovalent à fonctionnalisation NH₂,
R¹ étant de préférence choisi parmi
x) -R²-NH₂,
y) -R²-N(R³)-NH₂, et
z) -R²-N(R³)-R⁴-NH₂,
R² et R⁴ représentent chacun indépendamment de l'autre un groupe alkylène ou alkylènoxy ayant 1 à 20 atomes de carbone, de préférence un groupe alkylène ayant 1 à 5 atomes de carbone, et
R³ représente un atome d'hydrogène ou un groupe alkyle ayant 1 à 5 atomes de carbone,
R¹ étant de préférence x) -R²-NH₂, et R² représentant un groupe alkylène ayant 1 à 5 atomes de carbone, de préférence un groupe alkylène ayant 2 à 4 atomes de carbone, en particulier un groupe prop-1,3-diyle.

7. Composition de caoutchouc vulcanisable selon la revendication 6, dans laquelle le polyorganosiloxane présente 2,5 à 10,0 motifs structuraux I, en particulier 3,0 à 8,0 motifs structuraux I.

8. Composition de caoutchouc vulcanisable selon l'une des revendications précédentes, dans laquelle le composant c) est présent en une quantité de 0,2 à 7,0 parties en poids, de préférence de 0,5 à 6,5 parties en poids, d'une manière plus préférée de 1,0 à 6,0 parties en poids, en particulier de 1,5 à 5,5, comme 2,0 à 5,0 parties en poids, dans chaque cas pour 100 parties en poids du composant b).

9. Composition de caoutchouc vulcanisable selon l'une des revendications précédentes, qui contient en outre d) un ou plusieurs agents de réticulation de type amine,
l'agent de réticulation de type amine étant de préférence une diamine, de préférence une diamine aliphatique ou une diamine aromatique.

10. Composition de caoutchouc vulcanisable selon la revendication 9, dans laquelle la diamine aliphatique est choisie parmi l'hexaméthylènediamine et le carbamate d'hexaméthylènediamine, le composant b) étant en particulier le carbamate d'hexaméthylènediamine.

11. Composition de caoutchouc vulcanisable selon la revendication 9, dans laquelle la diamine aromatique est le 2,2-bis[4-(4-aminophénoxy)phényl]propane, le 4,4-diamino-dicyclohexylméthane ou le 4,4-diaminodiphényléther.

12. Composition de caoutchouc vulcanisable selon l'une des revendications 9 à 11, dans laquelle le composant d) est présent en une quantité totale de 0,1 à 10 parties en poids, de préférence de 0,2 à 8 parties en poids, d'une manière plus préférée de 0,3 à 7 parties en poids, dans chaque cas pour 100 parties en poids du caoutchouc.

13. Composition de caoutchouc vulcanisable selon l'une des revendications précédentes, qui comprend en outre
e) 0 à 200 parties en poids d'une ou plusieurs autres charges, de préférence le noir de carbone, pour 100 parties en poids du caoutchouc (phr),
f) 0 à 100 phr d'un plastifiant,
g) 0 à 8 phr d'un auxiliaire de mise en œuvre, l'auxiliaire de mise en œuvre étant choisi de préférence parmi l'acide stéarique, l'octadécylamine, les esters de l'acide phosphorique et les mélanges de ceux-ci,
h) 0 à 8 phr d'un agent de protection contre le vieillissement, et/ou
i) 0 à 10 phr d'un système accélérateur.

14. Caoutchouc vulcanisé pouvant être obtenu par vulcanisation de la composition de caoutchouc vulcanisable selon l'une des revendications précédentes.

15. Article qui comprend le caoutchouc vulcanisé selon la revendication 14.

16. Utilisation de polyorganosiloxanes ayant au moins deux groupes NH₂ par molécule,
dans une composition de caoutchouc vulcanisable qui comprend
a) un ou plusieurs caoutchoucs réticulables par une amine, et
b) une ou plusieurs charges claires,
dans laquelle
(i) la quantité totale du polyorganosiloxane ayant au moins deux groupes NH₂ par molécule est de 0,1 à 8 parties en poids, pour 100 parties en poids du composant b), et
(ii) la quantité totale de l'organosiloxane dans la composition de caoutchouc est d'au plus 4 parties en poids, pour 100 parties en poids du composant b), pour abaisser la déformation résiduelle par compression du caoutchouc vulcanisé.
